Europäisches Patentamt

European Patent Office

Office européen des brevets

(11) Veröffentlichungsnummer: **0 262 626**
B1

# EUROPÄISCHE PATENTSCHRIFT

(45) Veröffentlichungstag der Patentschrift:
06.06.90

(51) Int. Cl.⁵: **B60K 17/348**

(21) Anmeldenummer: 87114083.6

(22) Anmeldetag: 26.09.87

(54) Antriebsvorrichtung von Rädern zweier Achsen.

(30) Priorität: 01.10.86 DE 3633399

(43) Veröffentlichungstag der Anmeldung:
06.04.88 Patentblatt 88/14

(45) Bekanntmachung des Hinweises auf die Patenterteilung:
06.06.90 Patentblatt 90/23

(84) Benannte Vertragsstaaten:
AT BE CH DE ES FR GB IT LI

(56) Entgegenhaltungen:
EP-A- 0 182 312
DE-A- 3 408 991
DE-C- 3 516 982

(73) Patentinhaber: DEERE & COMPANY, 1 John Deere Road,
Moline, Illinois 61265(US)

(72) Erfinder: Schwarz, Reinhard, Jahnstrasse 7,
D-7519 Gondelsheim(DE)
Erfinder: Hückler, Volker, Rossittenstrasse 11,
D-7760 Radolfzell 16(DE)
Erfinder: Stuhrmann, Heinz Dr., Otto-Beck-Strasse 26,
D-6800 Mannheim(DE)
Erfinder: Nobis, Dieter, Reutestrasse 23,
D-7901 Lonsee-Halzhausen(DE)

(74) Vertreter: Feldmann, Bernhard, DEERE & COMPANY
European Office, Patent Department
Steubenstrasse 36-42 Postfach 503,
D-6800 Mannheim 1(DE)

ACTORUM AG

## Beschreibung

Die Erfindung betrifft eine Antriebsvorrichtung von Rädern zweier Achsen, von denen eine Achse eine Lenkachse ist, insbesondere Vierradantrieb von Ackerschleppern, mit einer zu den Rädern einer Achse führenden Abtriebswelle und mit einem die Abtriebswelle mit einem Hauptantrieb verbindenden Planetengetriebe mit einer ersten Stufe ohne Drehzahländerung und mit einer zweiten Stufe mit Drehzahländerung, wobei zur Drehzahländerung ein Teil des Planetengetriebes wahlweise festlegbar ist und wobei ein Fühler zum Erfassen des Lenkwinkels der Lenkachse vorgesehen ist, der das Planetengetriebe in eine seiner Stufen mittels einer Kupplung oder einer Bremse schaltet.

Bei einer derartigen Antriebsvorrichtung (DE-OS 3 408 991) wird ein von einem Hauptantrieb eingeleiteter Antrieb auf einen Planetenradträger eines antriebsseitigen Planetengetriebes übertragen. Ein Planetenradträger eines abtriebsseitigen Planetengetriebes ist mit dem Ringrad des antriebsseitigen Planetengetriebes verbunden, während ein Ringrad des abtriebsseitigen Planetengetriebes an einem Gehäuse festlegbar ist. Die Sonnenräder beider Planetengetriebe sind starr mit einer Abtriebswelle verbunden, die zu den antreibbaren Rädern einer vorderen Achse führt. In einer ersten Stufe wird das antriebsseitige Planetengetriebe blockiert, d. h. sein Planetenradträger und sein Sonnenrad werden miteinander drehfest verbunden, und es findet ein direkter Durchtrieb von dem Hauptantrieb zu der Eingangswelle statt. In einer zweiten Stufe wird das Ringrad des abtriebsseitigen Planetengetriebes drehfest gemacht, und es findet eine Drehzahlerhöhung zwischen dem Hauptantrieb und der Eingangswelle statt. Die beiden Stufen werden über Elektromagnetventile geschaltet, die in Abhängigkeit von dem Lenkwinkel der an der vorderen Achse vorgesehenen Räder beaufschlagt werden. Die automatische Schaltung der zweiten Stufe erfolgt dann, wenn aufgrund des vorgenannten Lenkwinkels der Vorlauf der vorderen Räder gegenüber rückwärtigen Rädern zu Null wird und die Räder der vorderen Achse bei Vorwärtsfahrt eine geringere Umfangsgeschwindigkeit innehaben als die Räder einer rückwärtigen Achse, d. h. wenn sie bremsen würden. Die Ursache dafür liegt darin, daß die vorderen Räder dann einen größeren Lenkradius beschreiben als die rückwärtigen Räder.

Diese bekannte Antriebsvorrichtung ist insofern als nachteilig anzusehen, als beim Umschalten von der ersten auf die zweite Stufe die Räder der vorderen Achse einen zu hohen und die Lenkbewegung beeinflussenden wie auch die Reifen der Räder bzw. den Boden beschädigenden Geschwindigkeits- oder Vorlaufsprung erfahren.

Die der Erfindung zugrunde liegende Aufgabe wird darin gesehen, die Antriebsvorrichtung derart zu verbessern, daß diese Vorlaufsprünge vermieden werden.

Diese Aufgabe ist erfindungsgemäß dadurch gelöst worden, daß der festzulegende Teil des Planetengetriebes über eine graduell, insbesondere stufenlos einrückbare Bremse oder Kupplung festlegbar ist, wobei der Grad ihres Kraftschlusses über einen bestimmbaren Lenkwinkelbereich in Abhängigkeit von dem Lenkwinkel regelbar ist.

Auf diese Weise findet eine Anpassung der Drehzahl der vorderen Räder an die Drehzahl der rückwärtigen Räder derart statt, daß daraus im wesentlichen ein Null-Prozent-Vorlauf oder ein bei einem bestimmten Wert liegender Vorlauf resultiert. Dies trägt zum Erreichen einer optimalen Fahrstabilität bei und verhindert sowohl Schäden an den Reifen wie auch Schäden an dem befahrenen Boden, z. B. an einer Grasnarbe.

Eine besonders hervorragende Gestaltung und Einbindung des Planetengetriebes zwischen dem Hauptantrieb und der Abtriebswelle wird bezüglich seiner Festigkeitauslegung durch die Merkmale der Patentansprüche 2 und 3 erreicht.

Um einer möglichen Überanspruchung der Kupplung oder der Bremse entgegenwirken zu können, sind die vorteilhaften Merkmale des Patentanspruches 4 vorgesehen.

In der Zeichnung ist ein nachfolgend näher beschriebenes Ausführungsbeispiel der Erfindung dargestellt. Es zeigt:

Figur 1 ein Kraftfahrzeug mit einer erfindungsgemäßen Antriebsvorrichtung in schematischer Darstellung und

Figur 2 ein Diagramm zur Erläuterung der mit der erfindungsgemäßen Antriebsvorrichtung erzielbaren Wirkung.

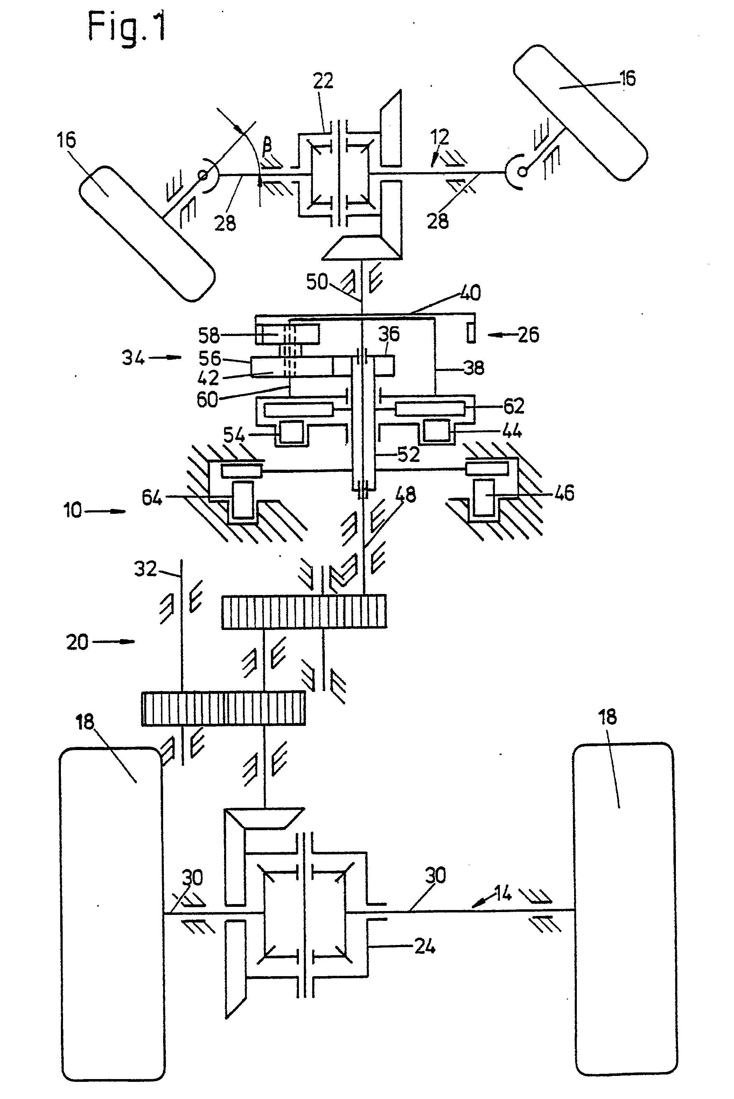

Ein in Figur 1 dargestelltes Kraftfahrzeug 10, etwa ein Ackerschlepper, weist eine vordere und eine rückwärtige Achse 12 und 14 auf, die mit vorderen antreibbaren und rückwärtigen angetriebenen Rädern 16 und 18 bestückt sind. Abgesehen von einer Vielzahl weiterer Teile des Kraftfahrzeuges 10, die einer besseren Übersicht wegen nicht dargestellt sind, enthält dieses im wesentlichen einen Hauptantrieb 20, ein vorderes Ausgleichsgetriebe 22, ein rückwärtiges Ausgleichsgetriebe 24 und ein Übersetzungsgetriebe 26 zwischen dem Hauptantrieb 20 und dem vorderen Ausgleichsgetriebe 22.

Die vordere Achse 12 ist als eine Lenkachse ausgebildet, und die vorderen Räder 16 können um entsprechend angeordnete nicht gezeigte Achsschenkel einen Lenkwinkel -β- von maximal ca. 50 Grad einnehmen. Der Lenkwinkel -β- ist zwischen der Rotationsachse des linken vorderen Rades 16 und der Längsmittenachse der vorderen Achse 12 angedeutet. Die vordere Achse 12 nimmt in sich das vordere Ausgleichsgetriebe 22 auf, von dem aus sich zu jeder Seite eine Welle 28 bis zu jeweils einem vorderen Rad 16 zu deren Antrieb erstreckt. Ansonsten kann die vordere Achse 12 einer herkömmlichen vorderen Achse für einen Vorderradantrieb entsprechen.

Die rückwärtige Achse 14 ist eine Starrachse und enthält außer dem rückwärtigen Ausgleichsgetriebe 24 Wellen 30 zum Übertragen des Antriebs auf die rückwärtigen Räder 18.

Die vorderen und die rückwärtigen Räder 16 und 18 sind herkömmlich ausgebildet, wobei in diesem Ausführungsbeispiel die vorderen Räder 16 einen

kleineren Außendurchmesser aufweisen als die rückwärtigen Räder 18.

Der Hauptantrieb 20 kann vielfältig und mit vielen oder wenigen Übersetzungsstufen, etwa als synchronisiertes Schaltgetriebe, als Lastschaltgetriebe oder als Strömungsmittelgetriebe, ausgestaltet sein - in der Zeichnung ist er einfach als ein mechanisches Schaltgetriebe angedeutet, dem ein Antrieb von einer Motorwelle 32 eines nicht gezeigten Motors eingespeist wird. Der Antrieb von dem Motor zu dem vorderen wie auch zu dem rückwärtigen Ausgleichsgetriebe 22 und 24 erfolgt zunächst immer über den Hauptantrieb 20, über den die Antriebsgeschwindigkeit bestimmt wird.

Beide Ausgleichsgetriebe 22, 24 dienen dem Drehzahlausgleich des jeweiligen Radpaares einer Achse 12, 14 bei Kurvenfahrt, und beide sind mit einer nicht dargestellen Sperre versehen, mittels derer das jeweilige Radpaar drehfest miteinander verbunden werden kann, was beim Einsatz auf ungleich haftenden Bodenflächen erforderlich ist.

Das Übersetzungsgetriebe 26 enthält ein Planetengetriebe 34 mit einem Sonnenrad 36, einem Planetenradträger 38, einem Ringrad 40, mehreren doppelrädrigen Planetenrädern 42, einer Kupplung 44 und einer Bremse 46.

Das Planetengetriebe 34 ist konzentrisch zu und auf einer antriebsseitigen Eingangswelle 48 und einer abtriebsseitigen Abtriebswelle 50 vorgesehen, wobei die Eingangswelle 48 die Verbindung zu dem Hauptantrieb 20 und die Abtriebswelle 50 die Verbindung zu dem vorderen Ausgleichsgetriebe 22 herstellen.

Das Sonnenrad 36 steht über eine Hohlwelle 52, in der die Eingangswelle 48 geführt ist, mit der Bremse 46 wie auch mit der Kupplung 44 drehfest in Verbindung und kann somit entweder gegenüber dem Kraftfahrzeug 10 drehfest gemacht werden oder sich, wie dies später noch erklärt wird, mit dem Planetenradträger 38 drehen. Außerdem kämmt das Sonnenrad 36 stets mit den Planetenrädern 42.

Der Planetenradträger 38 ist stets drehfest mit der Eingangswelle 48 verbunden und nimmt die Planetenräder 42 drehbar auf. In den Planetenradträger 38 ist auch ein Hydraulikkolben 54 integriert, der zwischen einer Stellung, in der die Kupplung 44 drehfest mit dem Planetenradträger 38 verbunden wird, und einer Stellung, in der sich die Kupplung 44 relativ zu dem Planetenradträger 38 dreht, verschiebbar ist.

Das Ringrad 40 hat die Form einer Glocke, die in sich eine Stufe der doppelrädrigen Planetenräder 42 aufnimmt und die an dem Glockenboden außen mittig mit der Abtriebswelle 50 verbunden ist, um den Antrieb auf das vordere Ausgleichsgetriebe 22 zu übertragen.

Die Planetenräder 42 sind doppelrädrig ausgebildet und haben jeweils ein großes und ein kleines Rad 56 und 58, die ein Doppelzahnrad bilden und stets drehfest miteinander verbunden sind. Sie sind jeweils auf einer Welle 60 in dem Planetenradträger 38 drehbar gelagert, und das kleine Rad 58 kämmt mit dem Ringrad 40, während das große Rad 56 mit dem Sonnenrad 36 ständig kämmt. Die Planetenräder 42 sind deshalb doppelrädrig, und die Räder 56, 58 sind deshalb mit unterschiedlich großen Durchmessern versehen, damit auf dem Weg über sie eine Drehzahländerung, nämlich insbesondere eine Drehzahlerhöhung, durchgeführt werden kann. Wenn bisher stets von mehreren Planetenrädern 42 die Rede war, so ist es dennoch ersichtlich, daß auch ein einziges doppelrädriges Planetenrad 42 ausreichend wäre.

Die Kupplung 44 ist vorzugsweise als naßlaufende Scheiben- oder Lamellenkupplung ausgebildet und weist zumindest in ihrem äußeren Ringbereich eine Reibfläche 62 auf, die von dem Hydraulikkolben 54 gegen eine geeignete und gegenüberliegende Fläche in oder an dem Planetenradträger 38 zur Anlage bringbar ist, und zwar derart, daß unter normalen Umständen und beaufschlagter Kupplung 44 keine Relativbewegung zwischen der Kupplung 44 und dem mit ihr verbundenen Sonnenrad 36 mehr stattfinden kann. Der Hydraulikkolben 54 kann entweder mittels Druckflüssigkeit in seine beiden Endstellungen oder mittels Druckflüssigkeit in die eine und mittels Federkraft in die andere Endstellung gebracht werden, wie dies bekannt ist. Allerdings sollte im Falle, daß der Hydraulikkolben 54 mittels Federkraft in eine seiner Endstellungen gebracht wird, die Federkraft so wirksam sein, daß sie den Hydraulikkolben 54 in Eingriff mit dem Planetenradträger 38 drängt, das Planetengetriebe 34 also auf direkten Durchtrieb schaltet. Die Beaufschlagung des Hydraulikkolbens 54, unabhängig davon in welche Richtung, erfolgt vorzugsweise über nicht gezeigte Elektromagnetventile.

Die Bremse 46 ist ebenfalls als naßlaufende Scheiben- oder Lamellenbremse ausgebildet, der ein Hydraulikkolben 64 zugeordnet ist und die mittels dieses Hydraulikkolbens 64 gegenüber dem Kraftfahrzeug 10 drehfest anlegbar ist. Die Beaufschlagung des Hydraulikkolbens 64, also seine Verschiebung, wird durch die Zufuhr von Druckflüssigkeit hervorgerufen.

Schließlich ist ein nicht dargestellter Regelkreis vorgesehen, der einen Fühler zum Erfassen des Lenkwinkels -β-der vorderen Räder 16, eine elektronische Regeleinheit und einen Temperaturfühler zum Erfassen der Reibungswärme an der Bremse 46 sowie die der Kupplung 44 und der Bremse 46 zugeordneten Elektromagnetventile umfaßt. Dieser Regelkreis ist derart ausgebildet, daß er die Kupplung 44 und die Bremse 46 in Abhängigkeit von dem Lenkwinkel -β- und der Temperatur an der Bremse 46 beaufschlagt. Falls gewünscht, kann auch an der Kupplung 44 ein derartiger Temperaturfühler vorgesehen sein.

Es ist möglich, Vorkehrungen zu treffen, durch die der Antrieb zu den vorderen Rädern 16 auch vollkommen unterbrochen werden kann. Hierzu könnte in der Eingangswelle 48 eine Trennkupplung vorgesehen sein, oder die Kupplung 44 und die Bremse 46 können so gesteuert werden, daß durch sie bzw. durch das Planetengetriebe 34 kein Antrieb übertragen werden kann.

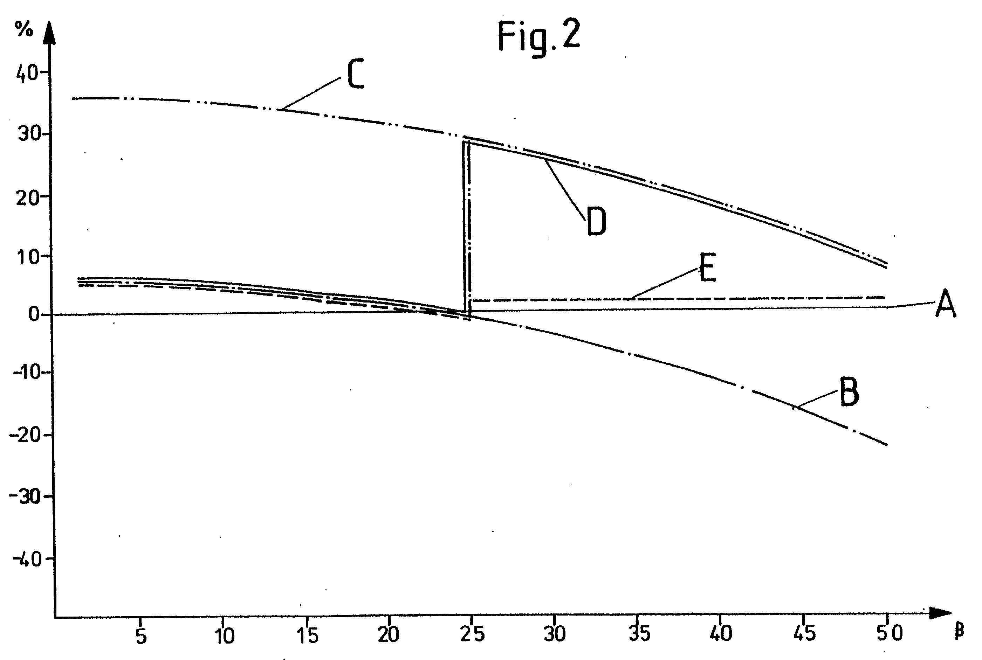

Bevor die Funktion sowohl des Planetengetriebes 34 wie auch des Regelkreises eingehend beschrieben wird, erfolgt eine Erläuterung von Figur 2.

Bei einem in Figur 2 aufgezeigten Diagramm ist auf der Ordinate der an den vorderen Rädern 16 mögliche Schlupf und auf der Abszisse der Lenkwinkel -β- aufgetragen.

Die in das Diagramm eingetragenen Daten basieren auf der Annahme, daß die vorderen Räder 16 bei Geradeausfahrt mit einer um 7 % höheren Umfangsgeschwindigkeit als die rückwärtigen Räder 18 angetrieben werden und daß die Geschwindigkeitsübersetzung mittels des Planetengetriebes 34 bei 30 % liegt. Eine Linie -A- in dem Koordinatensystem stellt mit 0 % Vorlauf, der dem Schlupf der vorderen Räder 16 entspricht, den Idealzustand der Umfangsgeschwindigkeiten der vorderen und der rückwärtigen Räder 16 und 18 beim Lenkvorgang, und zwar über den gesamten Lenkwinkel -β-, dar.

Eine Kurve -B- stellt den Verlauf der Beziehung Vorlauf/Schlupf der vorderen Räder 16 zum Lenkwinkel -β- bei unveränderlicher Umfangsgeschwindigkeit der vorderen Räder 16 dar, und man erkennt, daß trotz des Vorlaufes von 7 % die vorderen Räder 16 schon bei einem Lenkwinkel -β- von ca. 23 Grad genauso schnell abrollen wie die rückwärtigen Räder 18. Dies bedeutet, daß die mittleren Lenkradien der vorderen und der rückwärtigen Räder 16 und 18 bei ca. 23 Grad gleich sind. Könnten nach Überschreiten des Lenkwinkels -β- von 23 Grad die vorderen Räder 16 nicht mit einer höheren Umfangsgeschwindigkeit angetrieben werden, würde sich die Kurve -B- wie gezeigt fortsetzen, und es käme bei 50 Grad Lenkwinkel -β- zu einem Nachlauf bzw. einem Schlupf von ca. 23 %. Das Resultat daraus könnten Schäden an den Reifen der vorderen Räder 16, möglicherweise eine Beschädigung des in der Kurve befahrenen Bodens und eine hohe Torsionsbelastung in dem Antriebsstrang sein.

Eine zweite Kurve, -C- genannt, stellt die gleiche Beziehung dar, nun aber für den Fall, daß schon bei Beginn der Kurvenfahrt das Planetengetriebe 34 auf eine Drehzahlerhöhung von 30 % für die vorderen Räder 16 geschaltet ist. Bei dieser Kurve -C- wäre zwar kein Nachlauf zu erwarten; jedoch würde der von vornherein zu große Vorlauf die gleichen Probleme mit sich bringen.

Eine dritte Kurve -D- wird gebildet aus dem Teil der Kurve -B- von 0 bis 23 Grad und dem Teil der Kurve -C- von 23 bis 50 Grad. Es ist festzustellen, daß bei einem Lenkwinkel -β- unmittelbar oberhalb von 23 Grad der auf 0 % gesunkene Vorlauf abrupt auf ca. 28 % ansteigt. Es entstehen also wiederum die gleichen Probleme. Diese Kurve -C- entsteht bei der Anwendung der zum Stand der Technik gehörenden und eingangs erwähnten Antriebsvorrichtung.

Die Aufgabe der Erfindung ist mit einer Antriebsvorrichtung gelöst, mit der über den gesamten Lenkbereich annähernd 0 % Vorlauf erreicht wird.

Wie dies mit der erfindungsgemäßen Antriebsvorrichtung erzielt werden kann, folgt aus der nun folgenden Funktionsbeschreibung, zu der wiederum auf Figur 1 Bezug genommen wird.

Der Antrieb zu dem vorderen Ausgleichsgetriebe 22 und somit zu den vorderen Rädern 16 kann in einer ersten Stufe, und zwar in einem direkten Durchtrieb, und in einer zweiten Stufe, nämlich mit einer Drehzahlerhöhung, stattfinden.

<u>Erste Stufe - Direkter Durchtrieb</u>

Die Kupplung 44 wird derart beaufschlagt, daß das Sonnenrad 36 und der Planetenradträger 38 gemeinsam drehen und somit keine Relativbewegung zwischen dem kleinen Rad 58 der doppelrädrigen Planetenräder 42 und dem Ringrad 40 möglich ist. Die Bremse 46 ist offen und dreht mit dem Sonnenrad 36, so daß der Antrieb schließlich von der Eingangswelle 48 mit dem Planetenradträger 38 über das kleine Rad 58, das Ringrad 40 und die Abtriebswelle 50 zu dem vorderen Ausgleichsgetriebe 22 verläuft.

In dieser ersten Stufe wird die dargestellte Beziehung gemäß Kurve -B- in dem Bereich zwischen 0 und 23 Grad erfüllt.

<u>Zweite Stufe - Drehzahländerung</u>

Die Kupplung 44 ist geöffnet, so daß der Planetenradträger 38 eine Relativbewegung gegenüber dem Sonnenrad 36 ausführen kann. Hingegen ist die Bremse 46 und mit ihr das Sonnenrad 36 festgesetzt, so daß die Planetenräder 42, die mittels des Planetenradträgers 38 auf einem Kreisbogen bewegt werden, auf dem Sonnenrad 36 abrollen. Aufgrund des Durchmesserunterschieds des großen und des kleinen Rades 56 und 58 entsteht eine weitere Übersetzung zwischen dem kleinen Rad 58 und dem Ringrad 40, die zu einer Erhöhung der Drehzahl der Eingangswelle 48 führt. Die Bremse 46 wird allerdings nicht schon bei einem Lenkwinkel von 23 Grad zu 100 % festgesetzt, sondern erst dann, wenn der zusätzliche Weg, den die vorderen Räder 16 bei einer Kurvenfahrt beschreiten müssen, der maximalen Drehzahlerhöhung in dem Planetengetriebe 34 entspricht. Vielmehr wird der Lenkwinkel -β- ständig erfaßt und der elektronischen Regeleinheit zugeführt, die dann unter Berücksichtigung der Reifengröße der vorderen und der rückwärtigen Räder 16 und 18, des gewollten Vorlaufs der vorderen Räder 16 und des Lenkwinkels -β- festlegt, mit welchem Schlupf die Bremse 46 durchrutschen muß, damit der Vorlauf der vorderen Räder 16 innerhalb bestimmter Grenzen, beispielsweise bei ca. 0 %, bleibt.

Die Regelung des Schlupfes an der Bremse 46 soll so stattfinden, daß die in Figur 2 mit einer Kurve -E- veranschaulichte Beziehung, bei Lenkwinkel -β- ist größer als 23 Grad, entsteht. Es kann auch die Kupplung derart gesteuert werden, daß sie in der ersten Stufe teilweise durchrutscht und einen Vorlauf von annähernd 0 % bei einem Lenkwinkel -β- von 0 bis 23 Grad ergibt.

Der vorerwähnte Temperaturfühler kann sowohl zur ständigen Kontrolle der Betriebstemperatur an der Bremse 46 oder der Kupplung 44 wie auch zur Warnung bei einem ungewollt hohen Verschleiß an der Bremse 46 oder der Kupplung 44 herangezogen werden.

## Patentansprüche

1. Antriebsvorrichtung von Rädern (16, 18) zweier Achsen (12, 14), von denen eine Achse (12) eine Lenkachse ist, insbesondere Vierradantrieb von Ackerschleppern, mit einer zu den Rädern (16) einer Achse (12) führenden Abtriebswelle (50) und mit einem die Abtriebswelle (50) mit einem Hauptantrieb (20) verbindenden Planetengetriebe (34) mit einer ersten Stufe ohne Drehzahländerung und mit einer zweiten Stufe mit Drehzahländerung, wobei zur Drehzahländerung ein Teil des Planetengetriebes (34) wahlweise festlegbar ist und wobei ein Fühler zum Erfassen des Lenkwinkels (β) der Lenkachse vorgesehen ist, der das Planetengetriebe (34) in eine seiner Stufen mittels einer Kupplung (44) oder einer Bremse (46) schaltet, dadurch gekennzeichnet, daß der festzulegende Teil des Planetengetriebes (34) über eine graduell, insbesondere stufenlos einrückbare Bremse (46) oder Kupplung (44) festlegbar ist, wobei der Grad ihres Kraftschlusses über einen bestimmbaren Lenkwinkelbereich in Abhängigkeit von dem Lenkwinkel (β) regelbar ist.

2. Antriebsvorrichtung nach Anspruch 1 mit einer den Hauptantrieb (20) mit dem Planetengetriebe (34) verbindenden Eingangswelle (48), dadurch gekennzeichnet, daß die Eingangswelle (48) mit dem Planetenradträger (38) und die Kupplung (44) mit dem Sonnenrad (36) des Planetengetriebes (34) stets drehfest verbunden ist.

3. Antriebsvorrichtung nach Anspruch 1 oder 2, dadurch gekennzeichnet, daß in der Stufe ohne Drehzahländerung das Sonnenrad (36) mit dem Planetenradträger (38) drehfest verbunden ist.

4. Antriebsvorrichtung nach Anspruch 1, dadurch gekennzeichnet, daß an der Kupplung (44) oder an der Bremse (46) ein auf eine Warn- oder Regelvorrichtung wirkender Temperaturfühler vorgesehen ist.

## Claims

1. Drive device for wheels (16, 18) of two axles (12, 14), of which one axle (12) is a steering axle, especially four wheel drive of agricultural tractors, with a drive shaft (50) leading to the wheels (16) of one axle (12) and with a planetary gear (34) coupling the drive shaft (50) to a main drive (20), with a first stage without change of ratio and with a second stage with change of ratio, wherein a part of the planetary gear (34) is selectively arrested for changing the ratio and wherein a sensor is provided for determining the steering angle (β) of the steering axle, which switches the planetary gear (34) into one of its stages by means of a clutch (44) or a brake (46), characterized in that the part of the planetary gear (34) for arresting can be arrested by a gradual, especially a steplessly engaging brake (46) or clutch (44), the degree of its frictional connection being controllable over a predetermined steering angle range in dependence on the steering angle (β).

2. Drive device according to claim 1, with an input shaft (48) connecting the main drive (20) to the planetary gear (34), characterized in that the input shaft (48) is permanently connected rotationally fast to the planet wheel carrier (38) and the clutch (44) permanently rotationally fast to the sun wheel (36) of the planetary gear (34).

3. Drive device according to claim 1 or 2, characterized in that, in the stage without change of ratio, the sun wheel (36) is connected rotationally fast with the planet wheel carrier (38).

4. Drive device according to claim 1, characterized in that a temperature sensor acting as a warning or control device is provided on the clutch (44) or on the brake (46).

## Revendications

1. Dispositif d'entraînement de roues (16, 18) de deux essieux (12, 14) dont l'un des essieux (12), est un essieu directeur ou orientable, en particulier dispositif d'entraînement "quatre roues motrices" de tracteurs agricoles, comportant un arbre de sortie (50) aboutissant aux roues (16) d'un essieu (12) et un engrenage épicycloïdal (34) reliant l'arbre de sortie (50) à un dispositif d'entraînement principal (20), comportant un premier rapport sans changement de vitesse de rotation et un second rapport à changement de vitesse de rotation, pour le changement de vitesse de rotation, une partie de l'engrenage épicycloïdal (34) pouvant être bloqué à volonté et un détecteur destiné à détecter l'angle d'orientation (β) de l'essieu directeur étant prévu, lequel fait passer l'engrenage épicycloïdal (34) sur l'un de ses rapports au moyen d'un embrayage (44) ou d'un frein (46), caractérisé en ce que la partie à bloquer de l'engrenage épicycloïdal (34) peut être bloquée au moyen d'un frein (46) ou d'un embrayage (44) enclenchable graduellement, en particulier en continu, son degré de serrage pouvant être réglé sur un intervalle d'angles d'orientation déterminable en fonction de l'angle d'orientation (β).

2. Dispositif d'entraînement suivant la revendication 1 comportant un arbre d'entrée (48) reliant le dispositif d'entraînement principal (20) à l'engrenage épicycloïdal (34), caractérisé en ce que l'arbre d'entrée (48) est constamment solidarisé en rotation avec le porte-pignons (38) et l'embrayage (44) avec la roue solaire (36) de l'engrenage épicycloïdal (34).

3. Dispositif d'entraînement suivant la revendication 1 ou 2, caractérisé en ce que, dans le rapport sans changement de vitesse de rotation, la roue solaire (36) est solidaire en rotation du porte-pignons (38).

4. Dispositif d'entraînement suivant la revendication 1, caractérisé en ce qu'il est prévu sur l'embrayage (44) ou sur le frein (46) capteur de température agissant sur un dispositif d'avertissement ou de régulation.

# Fig.1

Fig.2

EP 0 262 626 B1